Europäisches Patentamt

European Patent Office

Office européen des brevets

(19)

(11) Numéro de publication: **0 231 778**
**B1**

(12) **FASCICULE DE BREVET EUROPEEN**

(45) Date de publication du fascicule du brevet:
25.04.90

(51) Int. Cl.⁴: **H01S 3/032,** H01S 3/041

(21) Numéro de dépôt: 87100439.6

(22) Date de dépôt: 15.01.87

(54) **Laser à gaz scellé.**

(30) Priorité: 27.01.86 FR 8601204

(43) Date de publication de la demande:
12.08.87 Bulletin 87/33

(45) Mention de la délivrance du brevet:
25.04.90 Bulletin 90/17

(84) Etats contractants désignés:
CH DE GB LI NL

(56) Documents cités:
EP-A- 0 048 690
FR-A- 2 086 023
US-A- 3 671 883

OPTICS AND SPECTROSCOPY,
vol. 26, no. 2, février 1969, pages 160-161, New York, US;
V.I. DONIN: "The continuous laser action of argon ions
at high current densities"
PATENT ABSTRACTS OF JAPAN,
vol. 9, no. 147 (E-323)[1870], 21 juin 1985; &
JP-A-60 28 284 (NIPPON DENKI K.K.) 13.02.1985

(73) Titulaire: ASULAB S.A., Faubourg du Lac 6,
CH-2501 Bienne(CH)

(72) Inventeur: Steffen, Jürg, Dorf, CH-3655 Sigriswil(CH)

(74) Mandataire: de Raemy, Jacques et al, ICB Ingénieurs
Conseils en Brevets SA Passage Max. Meuron 6,
CH-2001 Neuchâtel(CH)

## Description

La présente invention est relative à un laser à gaz comportant un tube à décharge fait d'une multiplicité de corps métalliques à haute conductibilité thermique disposés bout à bout sans se toucher et pourvus d'une ouverture centrale pour former une chambre d'ionisation, une chambre d'anode disposée à une extrémité du tube et pourvue d'un support d'anode, une chambre de cathode disposée à l'autre extrémité du tube et pourvue d'un support de cathode et des conduits de recirculation du gaz mettant en communication les chambres d'anode et de cathode par un autre circuit que celui du tube.

Un laser à gaz répondant dans les grandes lignes à la description donnée ci-dessus est décrit dans le brevet EP-B-0 048 690. Le tube à décharge comporte des corps métalliques à haute conductibilité thermique, en un alliage d'aluminium par exemple, ayant la forme générale de disques munis d'ailettes de refroidissement et percés en leur centre d'une ouverture. Ces corps métalliques sont disposés bout à bout de manière que leurs ouvertures centrales soient alignées et forment le tube de décharge du laser. Ce tube est destiné à être rempli d'un gaz, par exemple de l'argon, sous une faible pression.

Des chambres terminales comportant l'une une cathode et l'autre une anode sont disposées chacune à une extrémité du tube. Cette anode et cette cathode sont destinées à créer et entretenir une décharge électrique dans le gaz remplissant le tube.

Les corps métalliques du tube sont fixés à une enveloppe extérieure de celui-ci de manière à comprimer les uns contre les autres les corps de ce tube et donc à comprimer des joints d'étanchéité toriques situés entre ces corps et réalisés en caoutchouc ou en une matière plastique.

Pendant le fonctionnement du laser, les divers corps métalliques du tube sont portés à des potentiels différents, et la paroi du tube est soumise à un bombardement ionique intense de la part du plasma formé par le gaz qui remplit ce tube. Les corps formant le tube doivent donc être protégés contre l'érosion produite par ce bombardement ionique et être électriquement isolés les uns des autres. Cette protection et cette isolation sont assurées par une couche isolante, de préférence en oxyde d'aluminium, qui recouvre entièrement ces corps métalliques.

La chaleur dégagée par la décharge électrique entretenue dans le gaz remplissant le tube pendant le fonctionnement du laser est évacuée par un fluide, qui peut être de l'eau, circulant dans l'espace situé entre les ailettes des éléments et l'enveloppe extérieure du tube.

Le tube à décharge gazeuse décrit ci-dessus présente certains inconvénients.

Ainsi, l'élévation de la température des corps métalliques du tube pendant le fonctionnement du laser provoque la dilatation de ces éléments. Comme le coefficient de dilatation du matériau des corps métalliques est différent de celui de la couche isolante qui les recouvre, cette dilatation provoque l'apparition de fissures dans cette couche isolante. La présence de ces fissures permet au liquide de refroidissement du tube de pénétrer à l'intérieur de celui-ci, ce qui empêche le fonctionnement correct du laser.

En outre, à la mise en service du laser, ou après une interruption prolongée de son fonctionnement, le tube doit être vidé de l'air ou du gaz qu'il contient avant d'être rempli, ou rempli à nouveau, par le gaz voulu. De manière bien connue, cette mise sous vide est facilitée et améliorée par un chauffage simultané du tube.

Cependant, la présence des joints en caoutchouc ou en matière plastique situés entre les corps métalliques empêche de chauffer le tube à une température aussi élevée que cela serait souhaitable. En outre, ces joints retiennent à leur surface une quantité non négligeable d'air ou de gaz dont la présence augmente notablement la durée de cette mise sous vide.

De même, ces joints peuvent être détruits par le bombardement ionique venant du plasma formé dans le tube pendant le fonctionnement du laser. Les corps métalliques du tube doivent donc être munis de nervures et de rainures disposées de manière à protéger ces joints contre ce bombardement. Ces nervures et ces rainures compliquent la fabrication de ces éléments et augmentent leur prix.

Pour éviter ces inconvénients, il serait possible de remplacer ces joints en matière plastique par des joints en métal, par exemple en cuivre ou en aluminium, tels que ceux qui sont couramment utilisés dans les dispositifs comportant une enceinte étanche devant supporter une différence de pressions et/ou une température élevées.

L'utilisation de tels joints permettrait de chauffer le tube à une température élevée pendant la mise sous vide de la cavité. En outre, elle permettrait de résoudre le problème d'étanchéité posé par la présence de fissures dans la couche isolante recouvrant les éléments du tube. En effet, le métal de ces joints est suffisamment mou pour qu'il pénètre dans ces fissures et les bouche complètement lorsque ces joints sont serrés avec force entre deux éléments du tube.

Enfin, ces joints métalliques sont moins sensibles au bombardement ionique provenant du plasma pendant le fonctionnement du laser.

Cependant, lorsque de tels joints métalliques sont serrés entre deux corps métalliques du tube et qu'ils pénètrent dans les fissures de la couche d'isolation de ces éléments, ils risquent d'entrer en contact avec le métal non protégé, au fond de ces fissures, et de provoquer un court-circuit entre les éléments, ce qui empêche le fonctionnement du laser.

D'autre part, les moyens de serrage tels que ceux qui sont décrits dans le brevet EP-B-0 048 690 mentionné ci-dessus doivent être dimensionnés de manière à exercer sur le tube la somme des forces qui doivent être appliquées chacune à l'un des joints pour que ceux-ci assurent l'étanchéité du tube. Chacune de ces forces est beaucoup plus importante lorsque le joint est métallique que lorsqu'il est en plastique.

Si ces joints sont métalliques, et si le nombre d'éléments du tube est relativement grand, la force totale qui doit être exercée par les moyens de serrage devient très importante. Dans un tel cas, des moyens de serrage tels que ceux qui sont décrits dans le brevet EP-B-0 048 690 ne peuvent pratiquement plus être utilisés car leurs dimensions deviennent beaucoup trop grandes.

Pour pallier cet inconvénient on pourrait prévoir non pas un moyen de serrage unique, mais autant de moyens de serrage qu'il y a de corps métalliques formant le tube, par exemple des vis serrant deux de ces corps l'un contre l'autre alternativement.

Quoiqu'il en soit, que l'on choisisse la solution du brevet cité ou celle qui vient d'être proposée pour y remédier, il y aura toujours nécessité de prévoir des moyens de serrage pour l'assemblage du tube, moyens qui vont nécessiter des pièces spécialement prévues à cet effet et qui demanderont un temps de montage non négligeable. Les systèmes proposés ne sont d'ailleurs pas propres à garantir une étanchéité absolue. Ils pourraient à la rigueur être admis pour un laser dont l'intérieur est accessible car, dans ce cas, on peut remédier à un défaut d'étanchéité ou d'isolation d'un des corps métalliques en démontant le tube et en changeant le corps incriminé. Un laser scellé par contre doit présenter tout au long de sa durée de vie une étanchéité absolue et une isolation parfaite entre éléments car il n'est en principe pas réparable puisque son intérieur est inaccessible. On le préfère souvent à un laser démontable à cause de sa très grande fiabilité.

Le but principal de la présente invention est de proposer un laser à gaz dont les chambres d'anode et de cathode et les corps métalliques dont est composé le tube à décharge sont hermétiquement scellés les uns aux autres tout en état isolés les uns des autres.

Un autre but de l'invention est de proposer un laser à gaz complètement scellé et comprenant, outre les chambres d'anode et de cathode et le tube à décharge déjà mentionnés, des supports d'anode et de cathode scellés aux chambres d'anode et de cathode, lesdits supports portant de façon étanche des fenêtres de Brewster, des passages d'électrodes et des canaux de pompage.

Un autre but de l'invention est un procédé d'assemblage de la partie interne du laser à gaz comportant les chambres d'anode et de cathode et le tube à décharge.

Ainsi le laser à gaz selon l'invention telle que revendiquée dans la revendication 1 est caractérisé par le fait qu'à chacun des corps métalliques composant le tube à décharge et aux chambres d'anode et de cathode est fixé au moins un élément tubulaire circulaire monté coaxialement à l'axe de la chambre d'ionisation, le diamètre intérieur dudit élément tubulaire étant plus grand que le diamètre de ladite chambre d'ionisation et qu'un cordon de verre est disposé entre lesdits éléments tubulaires pour les sceller hermétiquement l'un à l'autre, le coefficient de dilatation thermique de chacun desdits éléments tubulaires étant sensiblement le même que le coefficient de dilatation thermique du verre.

Des modes particuliers de réalisation de l'invention corespondent aux revendications 2 à 10. Un procédé d'assemblage d'un laser selon l'invention est défini dans la revendication 11.

L'invention sera expliquée maintenant au moyen de la description qui suit, illustrée à titre d'exemple par des dessins dans lesquels :

- la figure 1a est un dessin en coupe montrant schématiquement l'ensemble du laser à gaz selon un premier mode d'exécution de l'invention;
- la figure 1b est une vue en coupe selon la ligne I - I de la figure 1a;
- la figure 2 est un dessin de détail montrant comment sont assemblés les corps métalliques et la chambre de cathode formant le laser illustré aux figures 1a et 1b;
- la figure 3 est une variante d'exécution de la réalisation présentée en figure 2;
- la figure 4a est une vue en plan (vue de A sur la figure 4b) d'un corps métallique composant le tube à décharge selon un second mode d'exécution de l'invention; et
- la figure 4b montre en coupe transversale comment sont assemblés les corps métalliques de la figure 4a et comment cet assemblage est assujetti à la chambre de cathode.

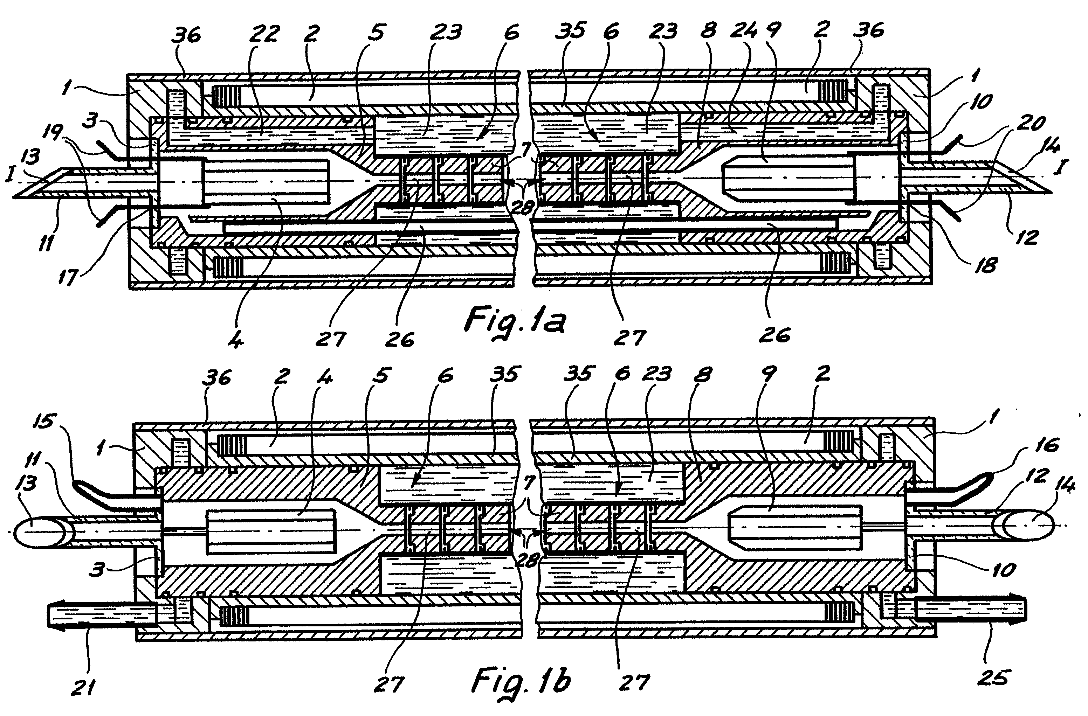

Les figures 1a et 1b représentent en coupe l'ensemble du laser à gaz selon l'invention et selon un premier mode d'exécution. Celui-ci comporte une partie intérieure qui sera définie ci-après, des flasques de fermeture 1, un tube annulaire intérieur 35 entourant entièrement ladite partie intérieure et délimitant un espace 23 où peut circuler un fluide de refroidissement, une bobine 2 destinée à créer un champ magnétique pour le confinement du rayon laser et enfin un tube de fermeture 36.

La partie intérieure forme une enceinte hermétiquement scellée qui comprend successivement un support 3 de cathode 4 obturant une chambre 5 de cathode, un tube à décharge 6 fait d'une multiplicité de corps métalliques 7 disposés bout à bout et une chambre 8 d'anode 9 obturée par un support 10 d'anode. Chaque corps métallique 7 est pourvu d'une ouverture centrale 27 pour former, quand lesdits corps métalliques sont assemblés, la chambre d'ionisation 28. Les supports 3, 10 de cathode et d'anode portent encore chacun un canon respectivement référencé 11 et 12 à l'extrémité desquels se trouve une fenêtre de Brewster 13 et 14. Si l'on dispose à chacune des extrémités de l'enceinte ainsi formée deux miroirs (non représentés), on aura formé une cavité résonante apte à produire un rayon laser selon la théorie connue de ce genre d'appareil. L'enceinte qui vient d'être définie est remplie d'un gaz, par exemple de l'argon à basse pression (0,1 à 10 mbar). A cet effet, chacun des supports 3 et 10 comporte un canal référencé respectivement 15 et 16 par lequel il est possible d'abord d'évacuer l'air contenu dans l'enceinte pour obtenir un vide poussé ($10^{-5}$ à $10^{-6}$ mbar) puis d'y introduire un gaz, ce dernier constituant le milieu d'amplification du laser. Après cette opération, chacun des canaux 15 et 16 est fermé ainsi que le montre la figure 1b. On voit encore que les supports 3 et 10 comprennent des passages respectivement référencés 17 et 18 par lesquels sont introduites dans les chambres de cathode et d'anode des électrodes 19 et 20 qui servent à la fois de supports et de connexion des cathode 4 et anode 9. Les supports 3 et 10 ainsi que les canons 11 et 12 peuvent être réalisés en molybdène. Dans ce cas les électrodes 19 et 20 sont isolées des supports 3 et 10 au moyen de passages 17 et 18 réalisés en verre. Les cathode et anode sont ici représentées de façon schématique. Plus de détails à ce sujet apparaissent dans le brevet EP-B-0 048 690 déjà cité.

On l'a vu, les diverses chambres composant le laser sont soumises à une pression très faible qui doit être conservée tout au long de la dure de vie du laser si l'on veut assurer à celui-ci des caractéristiques constantes. Ces chambres ainsi que les divers passages qui ont été mentionnés doivent donc être absolument imperméables aux gaz.

Les figures 1a et 1b montrent encore le circuit de refroidissement due laser constitué d'une buse d'entrée 21, d'un premier canal 22 pratiqué dans la chambre de cathode 5, d'un espace 23 entourant entièrement la chambre d'ionisation 6, d'un second canal 24 pratiqué dans la chambre d'anode 8 et d'une buse de sortie 25. De tels dispositifs laser sont caractérisés du point de vue de leur fonctionnement par une très forte densité de courant dans le milieu d'amplication gazeux, densité de l'ordre de 400 à 500 A/cm$^2$, ce qui nécessite de les munir d'un système très efficace d'évacuation de la chaleur. L'agent de refroidissement peut être de l'eau ou encore de l'huile. Les figures montrent que la chambre d'ionisation 6 baigne entièrement dans cette eau ou cette huile d'où la nécessité d'une étanchéité parfaite de la chambre d'ionisation si l'on veut éviter tout risque de fuite de fluide vers celle-ci ou encore vers les chambres d'anode et de cathode.

Les figures 1a et 1b montrent enfin que le laser est pourvu de conduits de recirculation du gaz dont un seul, référencé 26, apparaît à la figure 1a. Ces conduits sont scellés hermétiquement aux chambres d'anode et de cathode de façon appropriée. Ils ont pour but d'éviter la formation d'un gradient de pression qui serait suffisant pour annuler la décharge, gradient provoqué par les migrations des ions positifs et des atomes neutres vers l'anode. Cette migration est due à la densité de courant très élevée régnant dans le tube à décharge.

La présente invention apporte une solution aux problèmes d'étanchéité aux fluides et aux gaz qui ont été évoqués plus haut. Cette étanchéité peut être réalisée au moyen de divers modes d'exécution ou de variantes de ces modes d'exécution qui vont être décrits maintenant.

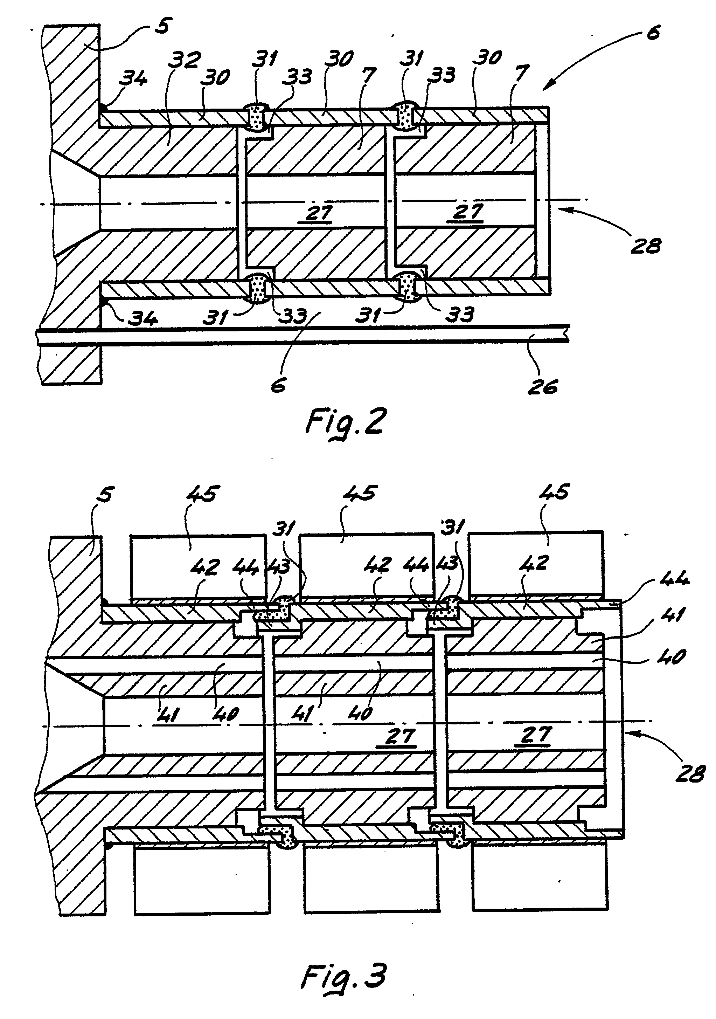

La figure 2 est un dessin de détail montrant comment sont assemblés les corps métalliques 7 et la chambre de cathode 5 formant une partie du laser illustré aux figures 1a et 1b. Corps métalliques et chambres d'anode et de cathode sont réalisés en métal à haute conductibilité thermique, ce qui permet une bonne évacuation de la chaleur vers le liquide caloporteur qui entoure le tube à décharge. Cependant, comme il est nécessaire de maintenir entre l'anode et la cathode un gradient de potentiel continu, non seulement les corps métalliques doivent être isolés les uns des autres mais encore la paroi interne de chaque ouverture centrale 27 doit être munie d'un revêtement isolant. Si les corps métalliques sont en aluminium ou en alliage d'aluminium (anticorodal par exemple), il sera aisé de leur faire subir un traitement de surface oxydant qui les couvrira d'alumine, excellente couche isolante qui peut atteindre une épaisseur de l'ordre de 50μm. Cependant, le scellement absolument hermétique et électriquement isolant des corps métalliques entre eux pose un problème qui n'a pas été résolu dans le document EP-B-0 048 690 précédemment cité, tout au moins pas pour le cas d'un laser scellé.

Si l'on pouvait utiliser du verre ou tout autre composé de silice pour un tel scellement, on pourrait assurer alors une étanchéité et une isolation parfaites entre corps métalliques, le verre présentant par ailleurs une excellente résistance aux températures élevées régnant dans le dispositif laser. Malheureusement, une soudure verre-aluminium s'avère impraticable à cause du fort coefficient de dilation thermique de l'aluminium et du faible coefficient de dilatation thermique du verre. Un tel scellement serait appelé à lâcher tôt ou tard.

Aussi, l'idée de l'invention selon son acception la plus large consiste-t-elle à mettre en oeuvre un scellement sous verre d'un matériau présentant le même coefficient de dilatation thermique que celui du verre. Ledit matériau se présente sous la forme d'au moins un élément tubulaire circulaire fixé à chaque corps métallique et aux chambres d'anode et de cathode, ledit élément étant monté coaxialement à l'axe de la chambre d'ionisation et présentant un diamètre intérieur plus grand que le diamètre de ladite chambre d'ionisation, un cordon de verre étant disposé entre chacun de ces éléments tubulaires. Des écarts de température importants peuvent alors se produire sans qu'il y ait risque de rupture de la soudure.

De nombreux verres sont connus comme agents de soudure soit par enverrage des pièces (traversée de courant), soit par dépôt de poudre de verre avec un liant formant une pâte appelée quelques fois "glass-frit" (fermeture des tubes télévision couleur). Par exemple, on peut citer les produits mis sur le marché par la société américaine Corning et qui se distinguent par une basse température de soudure (de l'ordre de 500°C).

Des matériaux ayant substantiellement les mêmes propriétés de dilatation thermique que celles du verre sont également connus. Ce sont généralement des alliages au nickel contenant approximativement 29 % de nickel, 17 % de cobalt, le reste étant du fer. Ils présentent un coefficient de dilatation semblable à celui du verre non seulement pour une température déterminée mais pour une gamme de température s'étendant généralement jusqu'à la température de ramollissement du verre. Un tel matériel est produit par exemple par la société Stupakoff Ceramic et est connu sous la marque déposée Kovar.

Si l'on revient maintenant au mode d'exécution particuler montré en figure 2, on s'aperçoit que chacun des corps métalliques 27 est cylindrique et qu'il est entouré entièrement par un seul élément tubulaire 30. Cet élément tubulaire 30 est réalisé avec le matériau dont il a été question à l'alinéa ci-dessus. Entre chacun des éléments 30 est disposé un cordon de verre 31 qui assure leur scellement hermétique. L'extrémité 32 de la chambre de cathode 5, tournée vers le tube à décharge 6 et également réalisée en matériau à haute conductibilité thermique, présente un diamètre sensiblement égale au diamètre des corps métalliques cylindriques 7. Cette extrémité est également recouverte d'un élément tubulaire 30 qui est scellé à l'élément voisin par un même cordon de verre 31. Bien que cela ne soit pas montré au dessin, la même construction est adoptée pour la chambre d'anode 8 (voir figures 1a et 1b).

La figure 2 montre encore que les éléments tubulaires 30 sont conformés pour se trouver placés bout à bout à l'endroit de leur scellement 31. On comprendra que l'élément tubulaire 30 pourrait se présenter différemment à l'endroit du scellement, par exemple de la façon qui sera décrite plus loin en figure 3. Dans la figure 2, on voit encore que les corps métalliques cylindriques 7 sont pourvus d'un logement 33 autour duquel est placé le cordon de verre 31. Cette façon de faire évite d'exposer directement le verre au bombardement ionique. On notera encore que l'élément 30 entourant l'extrémité 32 de la chambre de cathode 5 est brasé sur ladite chambre à l'endroit référencé 34 au moyen d'un apport de matière qu'on décrira plus loin à propos de la figure 4b. Enfin, pour assurer une bonne adhésion des éléments tubulaires 30 sur les corps métalliques 7, on pourra mettre en oeuvre un procédé dit de rétraction thermique par lequel on refroidit les corps 7 pour faire diminuer leurs diamètres. On introduit alors sur eux les éléments tubulaire qui y adhéreront solidement quand les corps auront retrouvé leur température normale.

Une fois les corps métalliques 7 et les extrémités 32 des chambres de cathode et d'anode munis de leur élément tubulaire 30, on les aligne bout à bout sur un posage convenable en ménageant un espace entre lesdits éléments. On remplit ensuite lesdits espaces de la pâte de verre dont on a parlé puis on introduit l'ensemble ainsi formé dans un four. On l'y maintient pendant un temps donné à une température provoquant la soudure du verre avec les éléments tubulaires. On comprendra que pour que l'espace entre les éléments reste le même durant toute l'opération, il est indispensable que le posage soit réalisé avec le même matériau que celui qui est utilisé pour lesdits éléments tubulaires.

La figure 3 est une variante d'exécution de la réalisation qui a été discutée plus haut. Elle se singularise par trois particularité qui sont indépendantes l'une de l'autre mais qui font partie de la même figure par souci de simplification.

Dans cette variante, on voit que les conduits de recirculation du gaz ne sont plus des tubes 26 disposés en dehors des corps métalliques 7 et des éléments tubulaires 30 qui leur sont assujettis comme c'était le cas en figure 2, mais que ces conduits sont des orifices 40 pratiqués dans la portion des corps métalliques 41 située entre la chambre d'ionisation 28 et les éléments tubulaires 42. Cette façon de faire a le mérite de ne plus poser de problèmes d'étanchéité comme c'était le cas des tubes 26 de la figure 2.

On voit également en figure 3 que les éléments tubulaires 42 sont conformées par leurs extrémités 43 et 44 pour chevaucher l'un sur l'autre à l'endroit où est disposé le cordon de verre 31. Cette façon de faire présente plusieurs avantages : celui de pouvoir positionner avec exactitude l'élément tubulaire 42 par rapport au corps métallique 41 grâce à l'épaulement présenté par l'extrémité 43; celui aussi d'éviter que le scellement de verre ne soit exposé directement au bombardement ionique; celui enfin d'une application plus facile de la pâte de verre à l'endroit du scellement avant solidification de cette pâte.

La figure 3 montre enfin que chaque élément tubulaire 42 est surmonté d'ailettes de refroidissement 45. Ces ailettes peuvent être réalisées en tôle pliée comme cela est montré par exemple dans le brevet US-A-3 763 442.

Comme on l'a signalé plus haut, les trois particularités qui viennent d'être décrites ne sont pas liées fonctionellement l'une à l'autre. De ce fait, une seule de celles-ci ou deux ou les trois à la fois pourraient être envisagées pour perfectionner le laser de l'invention.

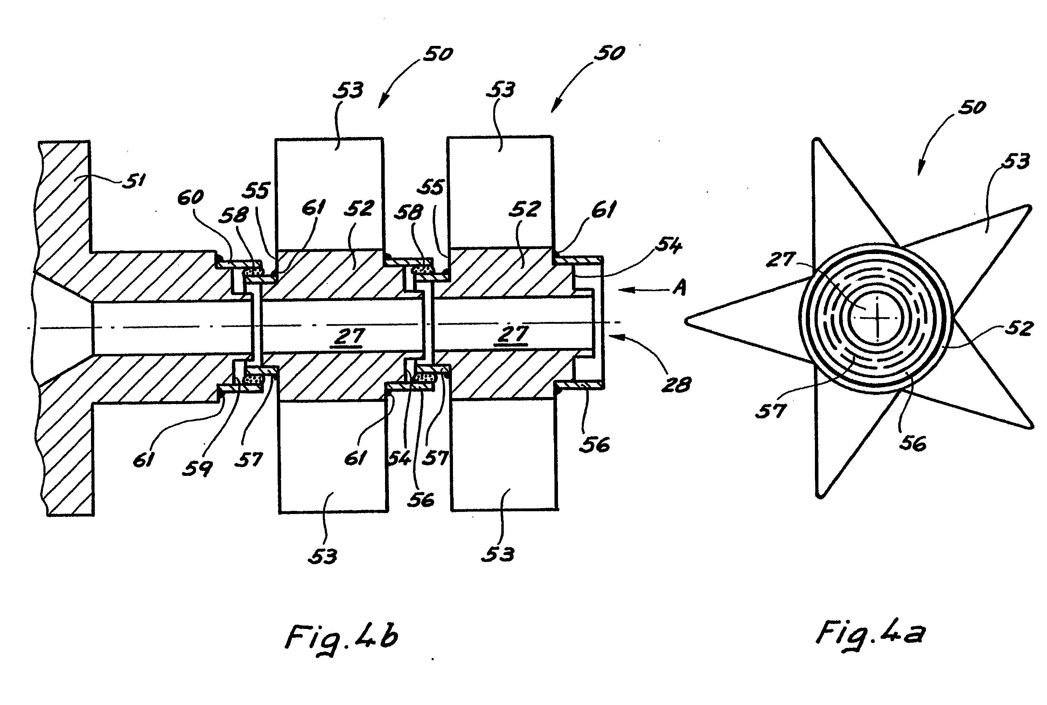

Les figures 4a et 4b montrent un second mode d'exécution de l'invention. La figure 4a est une vue en plan (vue de A sur la figure 4b) d'un corps métallique 50 composant le tube à décharge, tandis que la figure 4b est une coupe transversale montrant comment sont assemblés les corps métalliques 50 présentés en figure 4a et comment cet assemblage est assujetti à la chambre de cathode 51.

Dans cette exécution, chacun des corps métalliques 50 présente la forme d'un moyeu 52 surmonté d'ailettes de refroidissement 53 faites d'une pièce avec le moyeu 52. Cette exécution plus massive que celle décrite plus haut est particulièrement bien indiquée pour un laser de forte puissance car les ailettes de refroidissement réalisées par exemple en aluminium ou en alliage d'aluminium comme le moyeu permettent une meilleure évacuation de chaleur.

Les figures 4a et 4b montrent encore que les faces 54 et 55 de chacun des moyeux 52 sont pourvues d'un élément tubulaire référencé respectivement 56 et 57. Chacun de ces éléments présente la forme d'un tube circulaire, coaxial à la chambre d'ionisation 28 et dont le diamètre intérieur est plus grand que le diamètre de la chambre 28. Dans le cas particulier des figures 4a et 4b, les éléments 56 et 57 ont des diamètres différents de sorte qu'ils chevauchent l'un sur l'autre quand deux corps métalliques sont montés bout à bout. La même construction est adoptée pour la face 59 de la chambre de cathode 51 qui est pourvue d'un élément tubulaire 60. On retrouve ici, comme dans la première forme d'exécution, un cordon de verre 58 disposé entre les éléments tubulaires 56 et 57 ou 60 et 57 pour les sceller hermétiquement. Ici aussi les éléments tubulaires 56, 57 et 60 ainsi que les corps métalliques 52 sont arrangés pour que le scellement 58 ne soit pas exposé directement au bombardement ionique. Il est évident que d'autres arrangements peuvent être possibles, celui entre autres qui consiste à prévoir des tubes de même diamètre qui sont scellés bout à bout de la façon qui a été décrite à propos de la figure 2.

Dans l'exécution qui apparaît à la figure 4b, les éléments tubulaires sont brasés sur les corps métalliques selon une circonférence référencée 61. Le brasage aluminium - kovar peut être réalisé au moyen d'un produit à base de cadmium, par exemple la brasure portant le No 1827 de la société Castolin. Par cette brasure, les éléments tubulaires sont fixés de façon étanche aux corps métalliques. On voit de plus que les joues 54 et 55 de chacun des moyeux 52 présentent des tournages de diamètres différents. Sur ces tournages, les éléments tubulaires 56 et 57 sont d'abord enfilés puis brasés. On peut finalement procéder au scellement des éléments tubulaires entre eux au moyen d'un posage comme cela été expliqué à propos de la figure 2.

Une fois les corps métalliques et les chambres d'anode et de cathode scellés ensemble, il reste à sceller les supports 3 et 10, qui se présentent sous la forme de disques, aux sorties des chambres 5 et 8 respectivement (voir figures 1a et 1b). Ce scellement peut se faire par brasage. Auparavant, on aura pris soin de sceller également au moyen de glass-frit les fenêtres de Brewster 13 et 14 sur les canons 11 et 12 portés par les disques 3 et 10 respectivement. On scellera de la même façon les électrodes 19 et 20 et les canaux 15 et 16 qui traversent respectivement les disques 3 et 10. Par les canaux 15 et 16, on pourra d'abord faire le vide d'air dans l'enceinte laser puis la remplir d'un gaz, par exemple de l'argon, à la pression nécessaire. Finalement, on fermera les canaux 15 et 16.

**Revendications**

1. Laser à gaz comportant un tube à décharge (6) fait d'une multiplicité de corps métalliques (7, 41, 50) à haute conductibilité thermique disposés bout à bout sans se toucher et pourvus d'une ouverture centrale (27) pour former une chambre d'ionisation (28), une chambre (8) d'anode (9) disposée à une extrémité du tube et pourvue d'un support d'anode (10), une chambre (5, 51) de cathode (4) disposée à l'autre extrémité du tube et pourvue d'un support de cathode (3) et des conduits de recirculation du gaz (26, 40) mettant en communication les chambres d'anode et de cathode par un autre circuit que celui de la chambre d'ionisaton, caractérisé par le fait qu'à chacun desdits corps métalliques et auxdites chambres d'anode et de cathode est fixé au moins un élément tubulaire circulaire (30, 42, 56, 57) monté coaxialement à l'axe de la chambre d'ionisation , le diamètre intérieur dudit élément tubulaire étant plus grand que le diamètre de ladite chambre d'ionisation et qu'un cordon de verre (31, 58) est disposé entre lesdits éléments tubulaires pour les sceller hermétiquement l'un à l'autre, le coefficient de dilatation thermique de chacun desdits éléments tubulaires étant sensiblement le même que le coefficient de dilatation thermique du verre.

2. Laser à gaz selon la revendication 1, caractérisé par le fait que chacun des corps métalliques (7, 41) est cylindrique et entouré entièrement par un seul élément tubulaire (30, 42) et que les extrémités des chambres d'anode et de cathode tournées vers le tube à décharge présentent un diamètre sensiblement égal au diamètre des corps métalliques cylindriques, lesdites extrémités étant entourées entièrement par un seul élément tubulaire (30, 42).

3. Laser à gaz selon la revendicaton 2, caractérisé par le fait que les éléments tubulaires (30) sont conformés pour se trouver placés bout à bout à l'endroit de leur scellement.

4. Laser à gaz selon la revendicaton 2, caractérisé par le fait que chaque élément tubulaire est surmonté d'ailettes de refroidissement (45).

5. Laser à gas selon la revendication 1, caractérisé par le fait que chacun des corps métalliques (50) présente la forme d'un moyeu (52) surmonté d'ailettes de refroidissement (53) faites d'une pièce avec lui, les faces (54, 55) de chaque moyeu étant pourvues d'un élément tubulaire (56, 57), et que les faces (59) des chambres d'anode et de cathode tournées vers le tube à décharge sont également pourvues d'un élément tubulaire (60).

6. Laser à gaz selon la revendication 5, caractérisé par le fait que les éléments tubulaires (56, 57, 60) sont conformés pour chevaucher l'un sur l'autre à l'endroit de leur scellement.

7. Laser à gaz selon la revendication 5, caractérisé par le fait que les éléments tubulaires sont brasés (61) sur les faces des moyeux (52).

8. Laser à gaz selon la revendication 1, caractérisé par le fait que les conduits de recirculation du gaz sont des orifices (40) pratiqués dans la portion des corps métalliques située entre la chambre d'ionisation (28) et les éléments tubulaires (42).

9. Laser à gaz selon la revendicaton 1, caractérisé par le fait que les conduits de recirculation du gaz sont des tubes (26) scellés étanches aux chambres d'anode et de cathode et disposés en dehors des corps métalliques et des éléments tubulaires qui leur sont assujettis.

10. Laser à gaz selon la revendicaton 1, caractérisé par le fait que les supports d'anode et de cathode sont des disques (10, 3) scellés aux sorties des chambres d'anode et de cathode, chacun des disques comportant un canon (12, 11) à l'extrémité duquel est scellée une fenêtre de Brewster (14, 13), des passages étanches par lesquels sont introduites dans lesdites chambres des électrodes d'alimentation (20, 19) d'anode et de cathode et des canaux (16, 15) par lequel la cavité laser peut être successivement vidée de l'air qu'elle contient puis remplie d'un gaz constituant le milieu d'amplification dudit laser.

11. Procédé d'assemblage d'un laser à gaz selon la revendication 1, caractérisé par la suite des opérations suivantes :
- on aligne sur un posage fait d'un même matériau que celui utilisé pour les éléments tubulaires et selon l'axe de la chambre d'ionisation (28) les corps métalliques (7, 41, 50) munis de leur élément tubulaire (30, 42, 56, 57) en prenant soin de ménager un espace déterminé et sensiblement constant entre lesdits éléments;
- à chaque extrémité du tube à décharge (6) ainsi formé, on aligne sur ledit posage d'un côté la chambre d'anode (8) et de l'autre côté la chambre de cathode (5) en ménageant un espace entre les éléments tubulaires dont elles sont munies et l'élément tubulaire du corps métallique immédiatement voisin;

- on applique un cordon de verre (31, 58) sous forme de pâte dans lesdits espaces;
- on introduit le posage dans un four et on l'expose à une température provoquant la fusion de la pâte et la soudure des éléments tubulaires entre eux; et
- on sort le posage du four.

**Patentansprüche**

1. Gaslaser, umfassend ein aus einer Mehrzahl von Metallkörpern (7, 41, 50) hoher thermischer Leitfähigkeit hergestelltes Entladungsrohr (6), die Ende an Ende, ohne einander zu berühren, angeordnet sind und mit einer zentralen Öffnung (27) zur Bildung einer Ionisationskammer (28) versehen sind, eine Kammer (8) für eine Anode (9), angeordnet an einem Ende des Rohres und mit einem Anodensupport (10) versehen, eine Kammer (5, 51) für eine Katode (4), angeordnet am anderen Ende des Rohres und mit einem Katodensupport (3) versehen, und Gasrezirkulationsleitungen (26, 40), die die Anoden- und Katodenkammern über einen anderen Kreislauf kommunizieren lassen als denjenigen der Ionisationskammer, dadurch gekennzeichnet, daß an jedem der Metallkörper und der Anoden- und Katodenkammer mindestens ein Kreisrohrelement (30, 42, 56, 57) koaxial zur Ionisationskammer montiert befestigt ist, wobei der Innendurchmesser des Rohrelements größer ist als der Durchmesser der Ionisationskammer, und daß eine Glasraupe (31, 58) zwischen den Rohrelementen angeordnet ist, um diese hermetisch gegeneinander abzudichten, wobei der thermische Dilatationskoeffizient jedes Rohrelements im wesentlichen derselbe ist wie der thermische Dilatationskoeffizient von Glas.

2. Gaslaser nach Anspruch 1, dadurch gekennzeichnet, daß jeder der Metallkörper (7, 41) zylindrisch ist und von einem einzigen Rohrelement (30, 42) vollständig umschlossen ist und daß die dem Entladungsrohr zugewandten Enden der Anoden- und Katodenkammer einen Durchmesser im wesentlichen gleich dem der zylindrischen Metallkörper aufweisen, welche Enden vollständig von einem einzigen Rohrelement (30, 42) umschlossen sind.

3. Gaslaser nach Anspruch 2, dadurch gekennzeichnet, daß die Rohrelemente (30) im Bereich ihrer Abdichtung Ende an Ende plazierbar sind.

4. Gaslaser nach Anspruch 2, dadurch gekennzeichnet, daß jedes Rohrelement von Kühlrippen (45) überragt ist.

5. Gaslaser nach Anspruch 1, dadurch gekennzeichnet, daß jeder Metallkörper (50) die Form einer Nabe (52), überragt von einstückig mit ihr ausgebildeten Kühlrippen (53), aufweist, wobei die Stirnseiten (54, 55) jeder Nabe mit einem Rohrelement (56, 57) versehen sind, und daß die dem Entladungsrohr zugewandten Stirnseiten (59) der Anoden- und Katodenkammer ebenfalls mit einem Rohrelement (60) versehen sind.

6. Gaslaser nach Anspruch 5, dadurch gekennzeichnet, daß die Rohrelemente (56, 57, 60) im Bereich ihrer Abdichtung einander übergreifend ausgebildet sind.

7. Gaslaser nach Anspruch 5, dadurch gekennzeichnet, daß die Rohrelemente auf die Stirnseiten der Naben (52) hartgelötet (61) sind.

8. Gaslaser nach Anspruch 1, dadurch gekennzeichnet, daß die Gasrezirkulationsleitungen Öffnungen (40) sind, ausgebildet in dem zwischen der Ionisationskammer (28) und den Rohrelementen (42) liegenden Abschnitt der Metallkörper.

9. Gaslaser nach Anspruch 1, dadurch gekennzeichnet, daß die Gasrezirkulationsleitungen Rohre (26) sind, abdichtend vergossen mit der Anoden- und Katodenkammer und außerhalb der Metallkörper und der ihnen zugeordneten Rohrelemente angeordnet.

10. Gaslaser nach Anspruch 1, dadurch gekennzeichnet, daß der Anoden- und Katodensupport Scheiben (10, 3) sind, vergossen mit den Ausgängen der Anoden- und Katodenkammer, wobei jede der Scheiben einen Rohrlauf (12, 11) umfaßt, an dessen Ende ein Brewster-Fenster (14, 13) angegossen ist, abdichtende Durchführungen umfaßt, über die Speiseelektroden (20, 19) der Anode und der Katode in die Kammern eingeführt werden, und Kanäle (16, 15) umfaßt, über die der Laserhohlraum nacheinander von Luft, die er enthält, entleert werden und dann mit einem das Verstärkungsmilieu des Lasers bildenden Gas gefüllt werden kann.

11. Verfahren zum Aufbauen eines Gaslasers nach Anspruch 1, gekennzeichnet durch den Ablauf folgender Arbeitsgänge:
– man reiht auf einem Gestell aus dem gleichen Material wie die Rohrelemente und längs der Achse der Ionisationskammer (28) die mit ihren Rohrelementen (30, 42, 56, 57) versehenen Metallkörper (7, 41, 50) auf unter Beachtung eines vorgegebenen und im wesentlichen konstanten Zwischenraums zwischen den Elementen,
– an jedem Ende des so gebildeten Entladungsrohres (6) fluchtet man auf dem Gestell an der einen Seite die Anodenkammer (8) und an der anderen Seite die Katodenkammer (5) aus unter Vorsehen eines Zwischenraums zwischen den Rohrelementen, mit denen sie versehen sind, und den Rohrelementen der unmittelbar benachbarten Metallkörper
– man appliziert eine Glasraupe (31, 58) in Pastenform in die Zwischenräume,
– man führt das Gestell in einen Ofen ein und setzt es einer Temperatur aus, die das Aufschmelzen der Paste und das Verlöten der Rohrelemente miteinander bewirkt, und
– man entnimmt das Gestell dem Ofen.

**Claims**

1. Gas laser including a discharge tube (6) formed from a plurality of metallic bodies (7, 41, 50) of a high thermal conductivity arranged end to end without contacting one another and provided with a central opening (27) to form an ionisation chamber (28), an anode (9) chamber (8) arranged at one end of the tube and provided with an anode support (10), a cathode (4) chamber (5, 51) arranged at the other end of the tube and provided with a cathode support (3), gas recirculation ducts (26, 40) providing a communication path between the anode and cathode chambers other than that of the ionisation chamber, characterized by the fact that at least one element in the form of a circular tube (30, 42, 56, 57) is fixed to each of said metallic bodies and to said anode and cathode chambers, said elements being mounted coaxial with the axis of the ionisation chamber and having an interior diameter greater than the diameter of said ionisation chamber, and that a glass bead (31, 58) is deposited between said tubular elements so as to seal them hermetically to one another, the coefficient of thermal expansion of each of said tubular elements being substantially the same as the coefficient of thermal expansion of the glass.

2. Gas laser according to claim 1, characterized by the fact that each of the metallic bodies (7, 41) is of cylindrical form and entirely girdled by a single tubular element (30, 42) and that the ends of the anode and cathode chambers facing the discharge tube have a diameter substantially equal to that of the metallic cylindrical bodies, said ends being entirely girdled by a single tubular element (30, 42).

3. Gas laser according to claim 2, characterized by the fact that the tubular elements (30) are conformed so as to be situated end to end at the place of their sealing.

4. Gas laser according to claim 2, characterized by the fact that each tubular element is surmounted by cooling fins (45).

5. Gas laser according to claim 1, characterized by the fact that each of the metallic bodies (50) exhibits the form of a hub (52) surmounted by cooling fins (53) integral therewith, the end faces (54, 55) of each hub being provided with a tubular element (56, 57), and that the end faces (59) of the anode and cathode chambers facing the discharge tube are likewise provided with a tubular element (60).

6. Gas laser according to claim 5, characterized by the fact that the tubular elements (56, 57, 60) are conformed so as to overlap one another at the place of their sealing.

7. Gas laser according to claim 5, characterized by the fact that the tubular elements are brazed (61) onto the hub faces (52).

8. Gas laser according to claim 1, characterized by the fact that the gas recirculation ducts comprise orifices (40) formed in the portion of the metallic bodies located between the ionisation chamber (28) and the tubular elements (42).

9. Gas laser according to claim 1, characterized by the fact that the gas recirculation ducts comprise tubes (26) sealed in a gas tight manner to the anode and cathode chambers and placed outside the metallic bodies and the tubular elements fixed thereto.

10. Gas laser according to claim 1, characterized by the fact that the anode and cathode supports comprise discs (10, 3) sealed to the outlets of the anode and cathode chambers, each of the discs including a pipe (12, 11) at the end of which is sealed a Brewster window (14, 13), gas tight passages through which the energization electrodes (20, 19) are introduced respectively into the anode and cathode chambers and channels (16, 15) by means of which the laser cavity may be successively evacuated of air found therein and then refilled with the gas constituting the laser amplifying medium.

11. Method of assembling a gas laser according to claim 1 comprising the following steps:
– aligning the metallic bodies (7, 41) provided with their tubular elements (30, 42, 56, 57) on a fixture made from the same material as the tubular elements along the axis of the ionisation chamber (28) with a predetermined substantially constant gap being provided between said elements;
– aligning on said fixture at each end of the thus formed discharge tube (6) on one side the anode chamber (8) and on the other side the cathode chamber (5) whilst providing a gap between the tubular elements with which they are provided and the tubular element of the immediately neighbouring metallic body;
– applying a glass bead (31, 58) in the form of a paste to said gaps;
– introducing the fixture into an oven so as to bring it to a temperature causing fusion of the paste and welding together of the tubular elements;
– removing the fixture from the oven.

Fig.1a

Fig.1b

Fig.2

Fig.3

Fig.4a

Fig.4b